# EUROPEAN PATENT APPLICATION

(11) **EP 0 852 211 A1**
(43) Date of publication of application: **08.07.1998**
(21) Application number: 97203850.9
(22) Date of filing: 08.12.1997
(51) Int. Cl.: B65G 53/52, A01K 5/02

(54) **Metering and conveying system and method for conveying feed**

(30) Priority: 06.12.1996 NL 1004710
(71) Applicant: N.V. Nederlandsche Apparatenfabriek NEDAP, NL-7141 DE Groenlo (NL)
(72) Inventor: Harmsen, Jan Hendrik, 7255 BJ Hengelo (NL)
(74) Representative: Smulders, Theodorus A.H.J., Ir.

(57) **Abstract**

A metering and conveying system for moving types of feed that are hard to convey, in which these types of feed are moved in closely premetered portions by means of compressed air via a smooth seamless tube to a predetermined place. The metering of the amount of feed to be conveyed can be effected by a conveyor belt below the storage bunker or by a distributor in combination with the length of travel of a movable slide. Located in the pouring place is an air separator for preventing the feed from flying about. The system can be operated manually or by means of an animal identification system in which per animal the right metered portion is conveyed.

## Description

The invention relates to a metering and conveying system for conveying feed, such as Corn Cob Maize.

The invention also relates to a method for conveying feed.

For conveying feed, augers or chains are generally used. Some feed products are hard to convey, such as Corn Cob Maize (CCM).

CCM is a product obtained from milled maize grains with a piece of ear processed therein, also referred to as cob. It is rich in protein and minerals and therefore has a high nutritive value. The great drawback of this product, however, is the high moisture content, so that it sticks together, owing to which it is very hard to move this material with existing conveying systems. The mixing of CCM with other nutrients, such as wheat, may sometimes relieve this to some degree.

A problem which also occurs during the movement of CCM is caking, followed by jamming or breaking down of auger and/or chain systems. CCM is very perishable. Consequently, caking in a conveying system, thereby leaving remains, actually means that the feed is subject to decay, which may be injurious to the health of the animals.

It is the object of the present invention to solve the above problem. The system according to the invention is therefore characterized in that the system comprises metering means, at least a conveying tube and air compression means, which metering means are arranged to deliver portions of predetermined amounts of feed into the tube, and which air compression means are arranged to blow the delivered portions of feed through the tube to a predetermined place, such as a feeding place or a feed mixer.

The method according to the invention is characterized in that portions of feed of a predetermined amount or size are moved by means of compressed air via a tube to a predetermined place, such as a feeding place or a feed mixer.

The invention will now be explained with reference to the accompanying drawings in which:
Fig. 1 is a diagrammatic view of the metering and conveying system in which the supply is effected by means of a conveyor belt;
Fig. 2 is a diagrammatic view of the metering and conveying system in which the supply is effected by means of a distributor and a slide;
Fig. 3 is an embodiment in which the slide also closes the filling opening;
Fig. 4 is a detail of the slide in the open position;
Fig. 5 is a detail of the slide in the closed position; and
Fig. 6 is a diagrammatic view of the air separator at the end of the conveying line.

The invention comprises a system in which the movement of different types of feed, including CCM, is effected without moving parts by means of compressed air. The compressed air is passed at a high flow rate through a tube closed on one side, thereby entraining an amount of feed poured into this tube, to a predetermined pouring place.

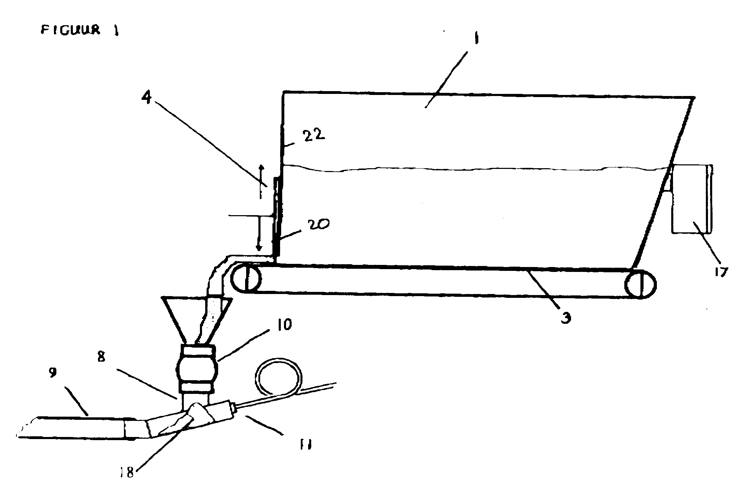

The feed stored in a pit can be poured by means of implements, e.g. a tractor with a front loader, into a storage bunker 1 of the system, which is diagrammatically shown in Fig. 1. The storage bunker 1 is equipped at the bottom with a conveyor belt 3, which carries the feed to a passage opening provided in the front wall 22. The size or height of this passage opening can be adjusted, as far as the height of passage is concerned, by means of a vertically adjustable slide 4. There is thus formed a uniform layer of feed, which comes out on the conveyor belt 3. The thickness of this feed layer on the conveyor belt 3, together with the rate of supply and the running time of the belt, determines a very closely metered amount of feed to be poured down. Accordingly, the storage bunker, together with the slide, forms metering means arranged to deliver predetermined amounts of feed.

The feed compresses as a compact mass in the storage bunker 1 and the conveyor belt 3 also carries a compact feed layer out, so in this system the inclusion of air and, consequently, oxygen is reduced to a minimum. CCM has, inter alia, the unpleasant property that the amount of feed in stock begins to heat if mixed with oxygen, which renders it unfit for consumption.

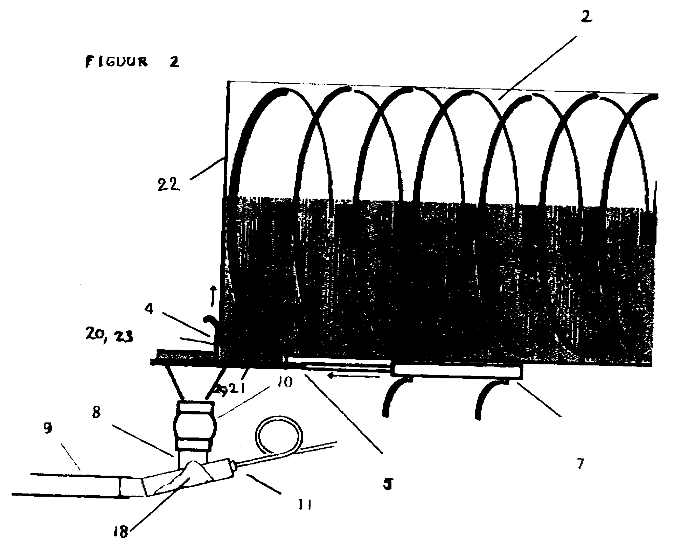

The storage bunker 1 may also be of the type without a conveyor belt 3. In this case, as shown in Fig. 2, a known per se mixer/distributor 2 ensures that the part 21 of the passage opening 20 arranged in the bottom of the bunker is continuously provided with feed, while, simultaneously, a horizontal movable slide 5 arranged below the part 21 of the passage opening 20 is filled. A slide 4 adjustable for height is arranged to determine the layer thickness of the feed on the horizontal slide 5. With the slide 4 the height of the part 23 of the passage opening 20, which extends in the side wall 22, can be adjusted. The horizontal slide 5 is longer than the width of the part 21 of the passage opening 20, so that the slide is also replenished during the sliding movement forward. During the return movement a cross plate positioned at the back of the outflow opening ensures that the feed lying on the slide 5 is pushed off. An adjustable length of travel of the horizontal slide, obtained by adjusting the air cylinder 7, as well as the height adjustment 4 in the part 23 of the passage opening 20 provide a closely metered amount of feed. In this example, the distributor 2 comprises a worm wheel driven for rotation, which, in use, conveys the feed in the direction of the side wall 22.

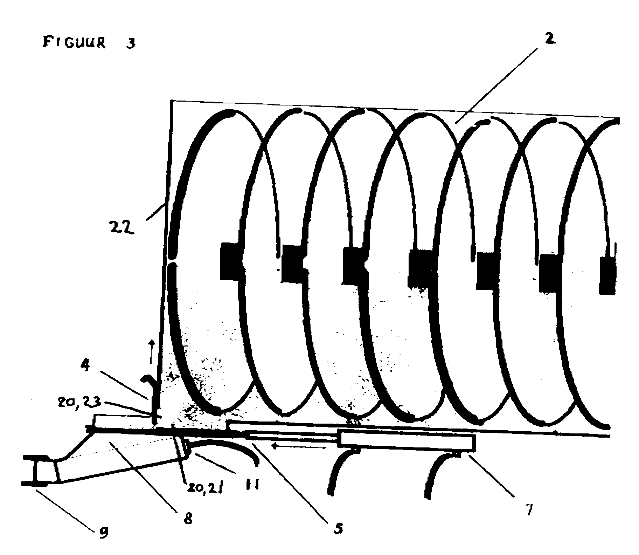

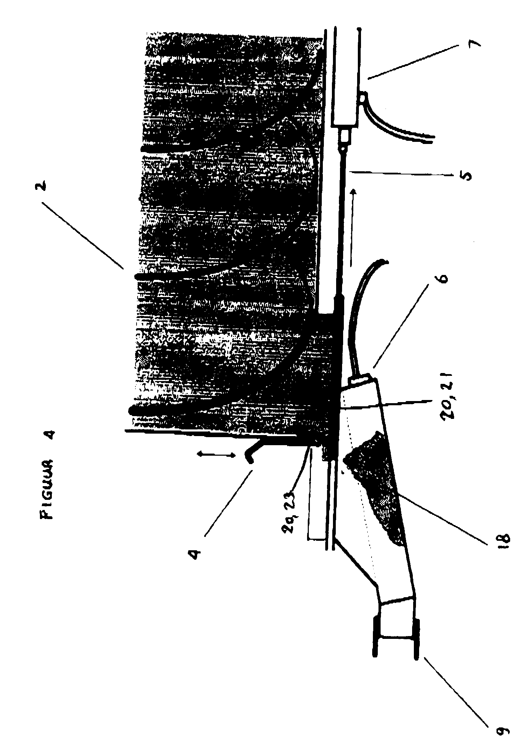

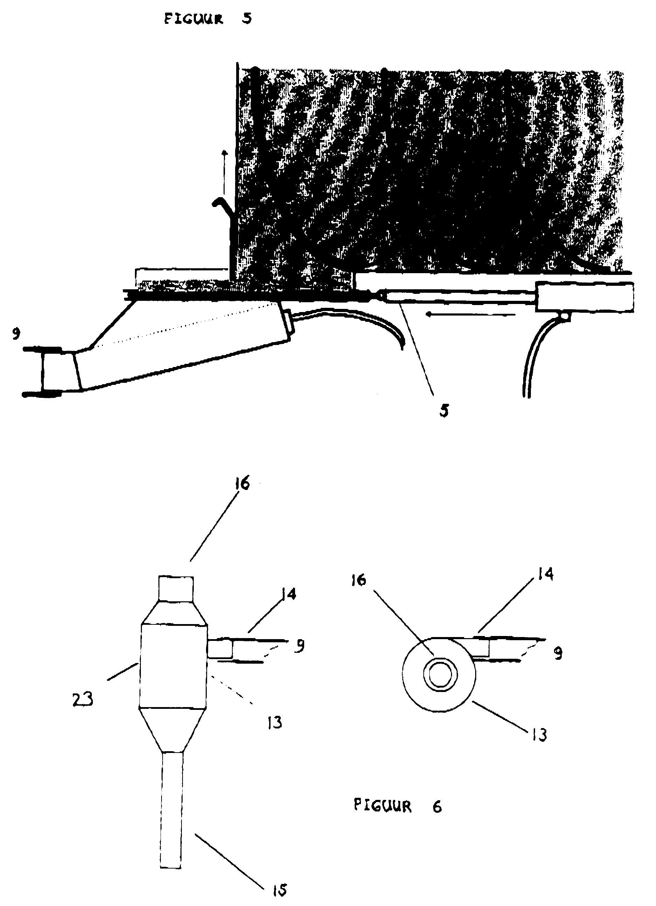

Situated below the metering opening of the storage bunker 1 is a closable space 8, which is connected to the smooth seamless conveying tube 9 made of steel or plastic. As shown in Figs. 1 and 2, this space 8 can be closed by a bellows 10, which is actuated by compressed air. The movable slide 5, too, may provide this closure, as shown in Fig. 3. In that case, the horizontally movable slide 5 has a double function, namely pouring down feed and closing the space 8, as diagrammatically shown in detail in Figs. 4 and 5.

As soon as the closable space 8 has been closed, it can be provided, together with the conveying tube 9, with compressed air by means of an operable valve 11, so that the amount of feed 18 poured into the space 8 is blown to the place of destination.

To prevent the feed from leaving the conveying tube with great velocity, thus flying about in all directions, which could result in a strong development of dust, an air separator is arranged at the end of the conveying tube. The air separator comprises, as shown in Fig. 6, a large cylindrical space 13 with a tangentially positioned connection 14 of the conveying tube 9. Provided at the top of the large cylindrical space 13 is an opening with a connecting pipe 16 to discharge the excess air. The opening provided at the bottom has a smaller diameter and is connected to a feed pouring pipe 15.

In the air separator, where air and feed together enter through the tangentially positioned connection 14, the feed slows down against the wall of the cylinder 13. The excess air can escape upward through the large opening via connecting pipe 16. This opening 16 has been selected so large that the excess pressure of air disappears as rapidly as possible, with the result that practically no dusting effect occurs. The feed falls under its own weight into the pouring pipe 15, which is arranged in the bottom opening of the cylindrical chamber 13, and thus falls down to a predetermined place. This predetermined place may be a feeding place for cattle or a mixer to which still other ingredients can be supplied.

Accordingly, the air separator has a tubular body, the longitudinal axis of which is at least substantially vertically directed, which tubular body comprises an inflow opening in a side wall, the downstream end of the tube terminating in the inflow opening in a tangential direction relative to the air separator, above which inflow opening an air outflow opening is provided in the air separator.

As shown in Fig. 1, the total system is equipped with a control box 17. This control box contains the functions ensuring that the operations to be performed are carried out successively at the right moment. A signal required to actuate the system can be given via a manual operation or originate from an electronic animal identification system.

When in the bottom of the storage bunker 1, instead of a horizontal movable slide, a conveyor belt 3 is used, as shown in Fig. 1, it rotates a predetermined time after a starting signal has been given to the control system in the control box 17.

## Claims

1. A metering and conveying system for conveying feed, such as Corn Cob Maize, characterized in that the system comprises metering means, at least a conveying tube and air compression means, said metering means being arranged to deliver portions of predetermined amounts of feed into the tube, and said air compression means being arranged to blow the delivered portions of feed through the tube to a predetermined place, such as a feeding place or a feed mixer.

2. A system according to claim 1, characterized in that the metering means comprise a storage bunker with a conveyor belt which forms at least part of the bottom of the storage bunker, said conveyor belt extending from an inner side of the storage bunker to outside the storage bunker, and a passage opening being provided in a side wall of the storage bunker above the conveyor belt.

3. A system according to claim 2, characterized in that the passage opening is provided with a slide movable up and down in the vertical direction for adjusting the height of a portion to be delivered.

4. A system according to claim 1, characterized in that the metering means comprise a storage bunker having arranged therein a feed mixer/distributor for distributing the feed in the storage bunker, a passage opening being provided at a bottom side of the storage bunker for delivering the portions of feed.

5. A system according to claim 4, characterized in that the metering means further comprise a horizontal first slide which, in use, can be moved to-and-fro in at least substantially a plane of a bottom of the storage bunker for delivering feed via the passage opening.

6. A system according to claim 4 or 5, characterized in that the passage opening extends into a side wall of the storage bunker.

7. A system according to claim 6, characterized in that the metering means further comprise a second slide for adjusting the height of the passage opening in the side wall.

8. A system according to any of the preceding claims, characterized in that the system further comprises an air separator, which has a tubular body, the longitudinal axis of which is at least substantially vertically directed, a side wall of said tubular body comprising an inflow opening, and the downstream end of the tube terminating in the inflow opening in a tangential direction relative to the air separator, an air outflow opening being provided above the inflow opening in the air separator.

9. A system for conveying feed, such as Corn Cob Maize, characterized in that this feed is moved in closely premetered portions by means of compressed air via a tube to a predetermined place, such as a feeding place or a feed mixer.

10. A system according to claim 1 or 9, characterized in that the metering of the amount of feed to be conveyed is effected by arranging a conveyor belt below the storage bunker, the amount of feed to be metered being determined by the rate of supply and the running time of the conveyor belt in combination with a preadjusted passage opening.

11. A system according to claim 1 or 9, characterized in that in a storage bunker a distributor is arranged which fills with feed an opening provided at the bottom of the storage bunker and closable by a movable slide, the metering of the amount of feed to be conveyed being effected by the preadjusted length of travel of the movable slide in combination with a preadjusted passage opening.

12. A system according to any of the preceding claims, characterized in that the conveying tube is a smooth seamless tube to prevent the feed from slowing down as far as possible.

13. A system according to any of the preceding claims 9-12, characterized in that at the end of the conveying tube an air separator with a tangentially positioned inflow opening is arranged, which provides that the feed slows down and effects the separation between the feed and the compressed air, so that a minimum development of dust takes place and the feed falls down only under its own weight.

14. A system according to any of the preceding claims, characterized in that the metering and conveying cycle is started by manual operation.

15. A system according to any of the preceding claims 1-13, characterized in that the metering and conveying cycle is started by a signal originating from an animal identification system, the metering optionally being made dependent on the identity of the animal to be fed.

16. A method for conveying feed, characterized in that portions of feed of a predetermined amount or size are moved by means of compressed air via a tube to a predetermined place, such as a feeding place or a feed mixer.

17. A method according to claim 16, characterized in that for delivering the portions of feed into the tube a storage bunker is used with a conveyor belt forming at least part of the bottom of the storage bunker, said conveyor belt extending from an inner side of the storage bunker to outside the storage bunker, and a passage opening being provided in a side wall of the storage bunker above the conveyor belt.

18. A method according to claim 17, characterized in that the passage opening is provided with a slide movable up and down in the vertical direction, the height of a portion to be delivered being adjusted by means of the slide.

19. A method according to claim 16, characterized in that a storage bunker is used having arranged therein a feed mixer/distributor for distributing the feed in the storage bunker, a passage opening for delivering the portions of feed being provided at a bottom side of the storage bunker, and a horizontal slide which, in use, can be moved to-and-fro in at least substantially a plane of a bottom of the storage bunker for delivering feed via the passage opening, the metering of the portions of feed to be conveyed being determined by adjusting a predetermined length of travel of the slide and adjusting the size of the passage opening.
